# EUROPÄISCHE PATENTSCHRIFT

(11) **EP 4 337 409 B1**
(45) Veröffentlichungstag und Bekanntmachung des Hinweises auf die Patenterteilung: **23.10.2024**
(21) Anmeldenummer: 22728215.9
(22) Anmeldetag: 09.05.2022
(51) Int. Cl.: B23K 9/095, B23K 9/10

(54) **SCHWEISSVORRICHTUNG UND SCHWEISSVERFAHREN**
WELDING DEVICE AND WELDING METHOD
DISPOSITIF DE SOUDAGE ET PROCÉDÉ DE SOUDAGE

(30) Priorität: 10.05.2021 EP 21173138
(43) Veröffentlichungstag der Anmeldung: 20.03.2024
(73) Patentinhaber: FRONIUS INTERNATIONAL GmbH, 4643 Pettenbach (AT)
(72) Erfinder: SÖLLINGER, Dominik, 4600 Wels-Thalheim (AT); MUSS, Michael, 4600 Wels-Thalheim (AT)
(74) Vertreter: Patentanwälte Pinter & Weiss OG
(86) Internationale Anmeldenummer: PCT/EP2022/062472
(87) Internationale Veröffentlichungsnummer: WO 2022/238323

(56) Entgegenhaltungen:
- US-A1- 2007 181 548
- US-A1- 2020 306 859
- US-B1- 6 710 297

## Beschreibung

Die Erfindung betrifft eine Schweißvorrichtung zur Durchführung eines Schweißprozesses mit einer Elektrode an einem Werkstück, wobei in der Schweißvorrichtung eine Schweißstromquelle mit einer ersten Anschlussbuchse zum elektrischen Anschließen eines Schweißbrenners mittels einer Schweißleitung und mit einer zweiten Anschlussbuchse zum elektrischen Anschließen eines Werkstücks mittels einer Masseleitung vorgesehen sind, wobei in der Schweißvorrichtung eine erste Spannungsmesseinrichtung zur Erfassung eines ersten elektrischen Schweißspannungssignals zwischen den Anschlussbuchsen vorgesehen ist, wobei in der Schweißvorrichtung eine Spannungsmessbuchse zum Anschließen einer Messleitung oder zwei Spannungsmessbuchsen zum Anschließen jeweils einer Messleitung vorgesehen sind, wobei in der Schweißvorrichtung eine zweite Spannungsmesseinrichtung zur Erfassung eines zweiten elektrischen Schweißspannungssignals zwischen der einen Spannungsmessbuchse und einer der Anschlussbuchsen oder zwischen den zwei Spannungsmessbuchsen vorgesehen ist, wobei in der Schweißvorrichtung eine Steuerungseinheit vorgesehen ist, die dazu ausgebildet ist, zumindest eines der Schweißspannungssignale zur Ermittlung von Steuerungsparametern zur Steuerung des Schweißprozesses zu verwenden und die Schweißstromquelle mit den ermittelten Steuerungsparametern zu steuern.

Die Erfindung betrifft weiters ein Verfahren zur Durchführung eines Schweißprozesses mit einer Elektrode an einem Werkstück, wobei die Elektrode über eine Schweißleitung mit einer Schweißstromquelle verbunden ist und das Werkstück über eine Masseleitung mit der Schweißstromquelle verbunden ist, wobei nach dem Zünden eines Lichtbogens zwischen der Elektrode und dem Werkstück ein Schweißstromkreis geschlossen wird, wobei im Schweißstromkreis ein erstes elektrisches Schweißspannungssignal und ein zweites elektrisches Schweißspannungssignal erfasst werden, wobei das zweite elektrische Schweißspannungssignal näher am Lichtbogen erfasst wird, als das erste elektrische Schweißspannungssignal, wobei die erfassten Schweißspannungssignale an eine Steuerungseinheit übermittelt werden und wobei die Steuerungseinheit zumindest eines der Schweißspannungssignale verwendet, um Steuerungsparameter zur Steuerung oder Regelung des Schweißprozesses zu ermitteln und wobei die Steuerungseinheit die Schweißstromquelle mit den ermittelten Steuerungsparametern steuert.

Ein herkömmliches MIG/MAG- oder WIG-Schweißgerät benötigt zur Regelung des durchgeführten Schweißprozesses üblicherweise als Ist-Größe ein Signal einer Schweißspannung des Schweißstromkreises. Der Schweißstromkreis wird dabei bekanntermaßen dadurch ausgebildet, dass an einen elektrischen Pol einer Schweißstromquelle (üblicherweise der Pluspol) ein Schweißbrenner mit daran angeordneter (abschmelzenden oder nicht-abschmelzenden) Elektrode angeschlossen wird und der andere Pol (üblicherweise der Minuspol) mit einem Werkstück verbunden wird. In der Regel ist dazu eine erste Anschlussbuchse vorgesehen, an die der Schweißbrenner mittels einer Schweißleitung angeschlossen werden kann und eine zweite Anschlussbuchse, an die das Werkstück mittels einer Masseleitung angeschlossen werden kann. Nachdem in bekannter Weise ein Lichtbogen zwischen der Elektrode und dem Werkstück gezündet wurde, wird der Schweißstromkreis geschlossen und es kann ein gewünschter Schweißprozess (z.B. ein Impulslichtbogenprozess, Kurzlichtbogenprozess, usw.) mit bestimmten Schweißparametern (Schweißstrom, Schweißspannung, etc.) durchgeführt werden.

Die Schweißspannung im Schweißstromkreis wird dabei in der Regel mit einer Spannungsmesseinheit gemessen, die üblicherweise im Schweißgerät angeordnet ist. Das bedeutet allerdings, dass bauartbedingt nur die Schweißspannung zwischen den Anschlussbuchsen der Stromquelle gemessen werden kann. Um den Schweißprozess möglichst genau Regeln zu können, ist allerdings die Lichtbogenspannung direkt am Lichtbogen von Interesse. Diese unterscheidet sich allerdings aufgrund von Spannungsabfällen in der Schweißleitung und in der Masseleitung von der gemessenen Buchsenspannung an den Anschlussbuchsen. Eine Regelung des Schweißprozesses auf Basis der gemessenen Buchsenspannung führt daher zu einer ungenauen Regelung und folglich zu einer unbefriedigenden Schweißqualität.

Es ist daher im Stand der Technik bekannt geworden, die Spannungsabfälle mittels eines Modells zu ermitteln und die gemessene Buchsenspannung entsprechend zu korrigieren. Dies kann beispielsweise mittels eines sogenannten RL-Abgleiches erfolgen, bei dem die Schweißleitung durch Widerstände und Induktivitäten modelliert wird, wie in EP 1 183 125 B1 offenbart ist. Diese Methode liefert zufriedenstellende Ergebnisse, wenn ein Schweißprozesses mit einem Schweißgerät durchgeführt wird. Werden aber parallel mehrere Schweißprozesse, beispielsweise in einer gemeinsamen Schweißzelle, durchgeführt, kann es vorkommen, dass die Masseleitungen und/oder die Schweißleitungen der unterschiedlichen Schweißvorrichtungen unmittelbar in räumlicher Nähe zueinander verlegt sind, z.B. abschnittsweise parallel zueinander. Dadurch kann es zu gegenseitiger elektromagnetsicher Beeinflussung der spannungsführenden Leitungen kommen, insbesondere zu einer Spannungsinduktion, die durch das Modell nicht oder nur unzureichend berücksichtigt werden können.

Es ist daher eine weitere Möglichkeit bekannt, die Schweißspannung möglichst nahe am Lichtbogen zu ermitteln. Dabei erfolgt die Spannungsmessung direkt in die Nähe des Lichtbogens, indem der Spannungsmessungsabgriff z.B. an der Elektrode (WIG) oder am Kontaktrohr im Schweißbrenner (MIG/MAG) und am Werkstück oder möglichst nahe am Werkstück erfolgt. Der Spannungsabgriff erfolgt dabei in der Regel mit Hilfe von separaten Sensorleitungen und die Messschaltung zur eigentlichen Spannungsmessung befindet sich z.B. im Schweißgerät. Diese Art der Messung liefert zwar auch bei mehreren parallel durchgeführten Schweißprozessen zuverlässige Ergebnisse, hat allerdings im Vergleich zur Buchsenspannungsmessung mit RL- Kompensation den Nachteil, dass die Sensorleitungen immer mit den Messpunkten verbunden sein müssen. Löst sich nun während des Schweißprozesses eine der beiden Sensorleitungen oder kommt es zu einer anderweitigen elektrischen Unterbrechung einer Sensorleitung, so wird keine Spannung mehr gemessen und die Lichtbogenregelung funktioniert nicht mehr. Der Schweißprozess muss dann in der Regel unterbrochen werden, weil keine ausreichende Schweißqualität mehr erreicht werden kann.

US 2020/306859 A1 offenbart den Oberbegriff der Ansprüche 1 und 11 und erwähnt auch die Problematik von Sensorleitungen in einer Schweißvorrichtung.

Ein Verfahren zum Erkennen von Abnormitäten der Leitungen im Schlauchpaket bzw. in den externen Spannungsmessleitungen ist auch bekannt. Das Verfahren erkennt, in welcher Messleitung es zu einer Abnormalitäten kommt. Die Spannungsmessungen der beiden Messleitungen werden verglichen und wenn eine Abnormalität in Form einer gewissen Abweichung zwischen den zwei Spannungsmesswerten festgestellt wird, wird die Stromquelle gestoppt und der Schweißprozess unterbrochen. Das Problem, dass der Schweißprozess unterbrochen werden muss, kann damit aber nicht behoben werden.

Es ist daher eine Aufgabe der Erfindung, eine Schweißvorrichtung und ein Schweißverfahren bereitzustellen, die auch bei mehreren, in räumlicher Nähe zeitgleich durchgeführten Schweißprozessen mit mehreren Schweißvorrichtungen ein unterbrechungsfreies Schweißen mit möglichst hoher Schweißqualität ermöglichen.

Die Aufgabe wird erfindungsgemäß mit einer eingangs genannten Schweißvorrichtung dadurch gelöst, dass die Steuerungseinheit dazu ausgebildet ist, in einem Normalbetriebsmodus das erste Schweißspannungssignal der ersten Spannungsmesseinrichtung zu ignorieren und das zweite Schweißspannungssignal der zweiten Spannungsmesseinrichtung zur Ermittlung der Steuerungsparameter zu verwenden, dass die Steuerungseinheit weiters dazu ausgebildet ist, anhand des zweiten Schweißspannungssignals einen Fehlerzustand im zweiten Schweißspannungssignal zu erkennen und bei Erkennung des Fehlerzustands ohne Unterbrechung des Schweißprozesses in einen Notbetriebsmodus zu wechseln und dass die Steuerungseinheit dazu ausgebildet ist, im Notbetriebsmodus das zweite Schweißspannungssignal der zweiten Spannungsmesseinrichtung zu ignorieren und das erste Schweißspannungssignal der ersten Spannungsmesseinrichtung zur Ermittlung der Steuerungsparameter zu verwenden. Dadurch kann ein zweites Schweißspannungssignal zur Regelung des Schweißprozesses verwendet werden, das näher am Lichtbogen gemessen wird, als das erste Schweißspannungssignal. Dadurch entspricht der gemessene Spannungswert des zweiten Schweißspannungssignals besser der tatsächlichen interessierenden Lichtbogenspannung am Lichtbogen, weil einerseits Spannungsabfälle in der Schweißleitung und/oder der Masseleitung nicht mitgemessen werden und andererseits auch allfällige induzierte Spannungen von anderen Schweißvorrichtungen nicht mitgemessen werden. Sobald ein Fehler zweiten Schweißspannungssignals festgestellt wird, beispielsweise, weil sich eine Messleitung gelöst hat oder gebrochen ist, erfolgt automatisch und ohne Unterbrechung des Schweißprozesses eine Umschaltung auf das erste Schweißspannungssignal. Der Schweißprozess muss somit im Fehlerfall nicht unterbrochen werden und kann, ggf. mit geringfügig verminderter Schweißqualität, fertiggestellt werden. Nachdem der Schweißprozess beendet wurde, kann der Fehler behoben werden und es kann erneut das qualitativ bessere zweite Schweißspannungssignal für die Steuerung bzw. Regelung des Schweißprozesses verwendet werden.

Gemäß einer vorteilhaften Ausführungsform ist vorgesehen, dass ein Schweißbrenner mittels einer Schweißleitung mit der ersten Anschlussbuchse elektrisch verbunden ist und eine mit dem Werkstück verbundene oder verbindbare Masseleitung mit der zweiten Anschlussbuchse elektrisch verbunden ist und dass an der einen Spannungsmessbuchse eine erste Messleitung angeschlossen ist, die mit einem zwischen der ersten Anschlussbuchse und der Elektrode des Schweißbrenners liegenden ersten Spannungsmesspunkt in der Schweißleitung elektrisch verbunden ist, wobei die zweite Spannungsmesseinrichtung dazu ausgebildet ist, das zweite elektrische Schweißspannungssignal zwischen der einen Spannungsmessbuchse und der zweiten Anschlussbuchse zu erfassen. Alternativ ist vorgesehen, dass an der einen Spannungsmessbuchse eine zweite Messleitung angeschlossen ist, die mit einem zweiten Spannungsmesspunkt in der Masseleitung elektrisch verbunden ist oder mit dem Werkstück elektrisch verbindbar ist, wobei die zweite Spannungsmesseinrichtung dazu ausgebildet ist, das zweite elektrische Schweißspannungssignal zwischen der einen Spannungsmessbuchse und der ersten Anschlussbuchse zu erfassen. Dadurch kann auch mit nur einer Messleitung das zweite Schweißspannungssignal näher am Lichtbogen gemessen werden als das erste Schweißspannungssignal.

Gemäß einer besonders vorteilhaften Ausführungsform ist vorgesehen, dass der Schweißbrenner mittels einer Schweißleitung mit der ersten Anschlussbuchse verbunden ist und eine mit dem Werkstück verbundene oder verbindbare Masseleitung mit der zweiten Anschlussbuchse verbunden ist, dass an einer der zwei Spannungsmessbuchsen eine erste Messleitung angeschlossen ist, die mit einem zwischen der ersten Anschlussbuchse und der Elektrode des Schweißbrenners liegenden ersten Spannungsmesspunkt in der Schweißleitung elektrisch verbunden ist und an der anderen Spannungsmessbuchse eine zweite Messleitung angeschlossen ist, die mit einem zweiten Spannungsmesspunkt in der Masseleitung elektrisch verbunden ist oder mit dem Werkstück elektrisch verbindbar ist.

Dadurch kann das zweite Schweißspannungssignal in vorteilhafter Weise noch näher am Lichtbogen gemessen werden als das erste Schweißspannungssignal.

Vorzugsweise sind die erste Messleitung und die zweite Messleitung zumindest abschnittsweise verdrillt. Dadurch kann verhindert werden, dass z.B. von anderen Schweißvorrichtungen, deren Leitungen in räumlicher Nähe verlegt sind, eine elektrische Spannung in den Messleitungen induziert wird, welche die gemessene Spannung unter Umständen verfälschen würde.

In der Schweißvorrichtung kann vorteilhafterweise eine Vorschubeinheit zum Zuführen eines Schweißdrahts zum Schweißbrenner vorgesehen sein, wobei die zweite Spannungsmesseinrichtung und die eine Spannungsmessbuchse oder die zwei Spannungsmessbuchsen an der Vorschubeinheit vorgesehen sind und wobei die zweite Spannungsmesseinrichtung zur Übermittlung des zweiten elektrischen Schweißspannungssignals über eine Kommunikationsverbindung mit der Steuerungseinheit verbunden ist. Dadurch kann eine von der Schweißstromquelle räumlich getrennte separate Vorschubeinheit verwendet werden. Die zweite Spannungsmesseinrichtung kann z.B. in der Vorschubeinheit integriert sein und die Spannungsmessbuchsen können an der Vorschubeinheit angeordnet sein. Die Kommunikationsverbindung kann beispielsweise als Datenbus ausgebildet sein, um das zweite Schweißspannungssignal mit möglichst geringem Zeitverzug an die Steuerungseinheit der Schweißvorrichtung zu übermitteln, die vorzugsweise im Bereich der Schweißstromquelle angeordnet ist und damit ebenfalls räumlich von der Vorschubeinheit getrennt.

Es kann weiters vorteilhaft sein, wenn in der Schweißvorrichtung eine zusätzliche Messspannungsquelle vorgesehen ist, die mit den zwei Spannungsmessbuchsen verbunden ist oder mit der einen Spannungsmessbuchse und einer der Anschlussbuchsen verbunden ist, wobei die Steuerungseinheit dazu ausgebildet ist, den Fehlerzustand im zweiten Schweißspannungssignal anhand einer von der Messspannungsquelle erzeugten elektrischen Messspannung zu erkennen. Besonders vorteilhaft ist es dabei, wenn die Messspannungsquelle eine gegenteilige elektrische Polung aufweist wie die Schweißstromquelle. Dadurch wird die Erkennung des Fehlerzustandes vereinfacht, insbesondere beschleunigt, weil die Umkehrung der Polarität einfacher detektierbar ist.

Es ist vorteilhaft, wenn die Messspannungsquelle an zumindest eine Spannungsmessbuchse hochohmig angeschlossen ist und/oder dass die Messspannungsquelle über zumindest einen bekannten Ohm'schen Widerstand an zumindest eine Spannungsmessbuchse angeschlossen ist. Durch den hochohmigen Anschluss ist die Messspannung im Normalbetriebsmodus für die Erfassung des zweiten Schweißspannungssignals im Schweißstromkreis vernachlässigbar, sodass keine Verfälschung des zweiten Schweißspannungssignals resultiert. Wenn der Ohm'sche Widerstand der Messspannungsquelle alternativ oder zusätzlich bekannt ist, kann der Spannungsabfall an den Widerständen berechnet und bei der Erfassung des zweiten Schweißspannungssignals berücksichtigt und das zweite Schweißspannungssignal ggf. korrigiert werden.

In der Steuerungseinheit kann weiters auch ein Schweißstromkreismodell hinterlegt sein und die Steuerungseinheit kann dazu ausgebildet sein, den Fehlerzustand im zweiten Schweißspannungssignal anhand des Schweißstromkreismodells zu erkennen. Das Schweißstromkreismodell enthält dabei vorzugsweise zumindest ein Modell der Schweißleitung, wobei das Modell der Schweißleitung vorzugsweise zumindest einen Ohm'schen Widerstand und zumindest eine Induktivität enthält. Vorzugsweise sind die Modellparameter des Schweißstromkreismodells an den Schweißstromkreis einer real aufgebauten Schweißvorrichtung anpassbar. Mittels des Modells kann dadurch, vorzugsweise kontinuierlich, ein zu erwartender Modell-Wert für das zweite Schweißspannungssignal berechnet werden und mit dem aktuell real erfassten zweiten Schweißspannungssignal verglichen werden. Eine Abweichung kann als Fehlerzustand detektiert werden.

Es kann vorteilhaft sein, wenn in der Schweißvorrichtung ein Schweißroboter vorgesehen ist, wobei der Schweißbrenner am Schweißroboter angeordnet ist und vom Schweißroboter bewegbar ist und wobei der erste Spannungsmesspunkt am Schweißroboter vorgesehen ist, vorzugsweise im Bereich des Schweißbrenners. Dadurch kann auch bei einem automatisierten Schweißverfahren die Schweißspannung möglichst nahe am Lichtbogen erfasst werden und die erfindungsgemäße Umschaltung zwischen Normalbetriebsmodus und Notbetriebsmodus durchgeführt werden.

Die Aufgabe wird zudem mit einem Verfahren nach Anspruch 11 gelöst. Vorteilhafte Ausgestaltungen des Verfahrens sind in den abhängigen Ansprüchen 12 bis 15 angegeben.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine Schweißvorrichtung zur Durchführung eines Schweißprozesses,
Fig.2 eine Messschaltung zur Erkennung eines Fehlerzustandes und
Fig.3 ein Schweißstromkreismodell zur Erkennung eines Fehlerzustandes.

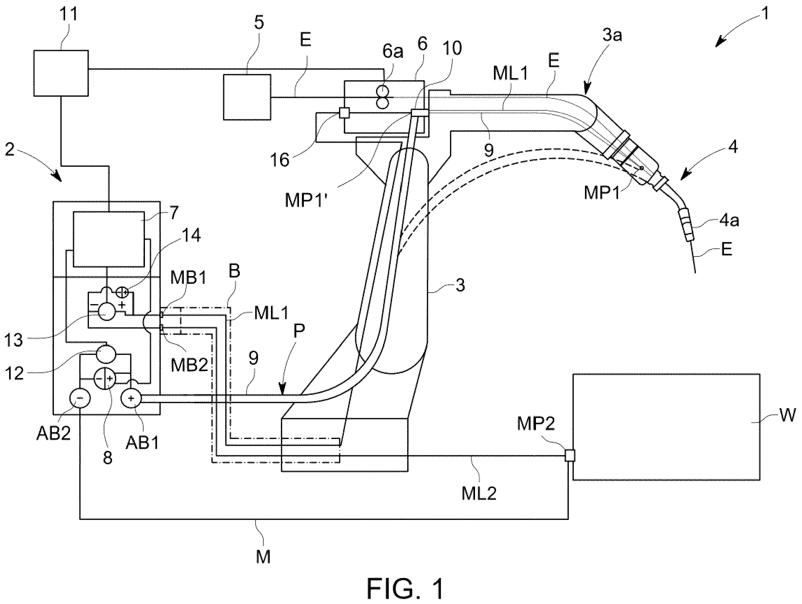

In Fig.1 ist eine Schweißvorrichtung 1 zur Durchführung eines Schweißverfahrens schematisch dargestellt. Die dargestellte Schweißvorrichtung 1 ist zur Durchführung eines Schweißverfahrens mit abschmelzender Elektrode ausgebildet, also dem bekannten MIG/MAG-Verfahren bzw. allgemein Metall-Schutzgas-Verfahren (MSG). Natürlich ist das nur beispielhaft zu verstehen und die Erfindung könnte auch bei anderen Schweißverfahren, beispielsweise bei einem Schweißverfahren mit nicht-abschmelzender Elektrode (WIG) verwendet werden. Die dargestellte Schweißvorrichtung 1 weist ein Schweißgerät 2 und einen Schweißroboter 3 auf, an dem ein Schweißbrenner 4 angeordnet ist. Der Schweißbrenner 4 kann vom Schweißroboter 3 in den verfügbaren Freiheitsgraden bewegt werden, um eine (nicht dargestellte) Schweißnaht mit einer bestimmten Geometrie an einem Werkstück W zu erzeugen. Der Schweißroboter 3 ist aber nur optional und der Schweißbrenner 4 könnte natürlich auch von einem Benutzer per Hand geführt werden.

Am Schweißbrenner 4 ist bekanntermaßen eine abschmelzende Elektrode E in Form eines Schweißdrahtes vorgesehen. Der Schweißdraht kann dem Schweißbrenner 4 mittels einer Vorschubeinheit 6 zugeführt werden, der beispielsweise in einem Drahtspeicher 5 gespeichert ist. Die Vorschubeinheit 6 kann eine Antriebseinheit 6a aufweisen, um den Schweißdraht dem Schweißbrenner 4 bzw. dem (nicht dargestellten) Schmelzbad am Werkstück W mit einer gewünschten Vorschubgeschwindigkeit zuzuführen. Die Antriebseinheit 6a kann von einer geeigneten Steuerungseinheit angesteuert werden, um die Vorschubgeschwindigkeit als Schweißparameter entsprechend eines durchgeführten Schweißprozesses zu steuern oder zu regeln. Im dargestellten Beispiel ist die Vorschubeinheit 6 Teil des Schweißroboters 3, als Steuerungseinheit zur Steuerung der Vorschubgeschwindigkeit kann daher beispielsweise Roboter-Steuerungseinheit 11 verwendet werden, die die Antriebseinheit 6a in geeigneter Weise steuert.

Zur Steuerung des Schweißverfahrens, kann die Roboter-Steuerungseinheit 11 mit einer, vorzugsweise im Schweißgerät 2 angeordneten, Steuerungseinheit 7 der Schweißvorrichtung 1 kommunizieren, um die Vorschubgeschwindigkeit des Roboters mit anderen Schweißparametern (Schweißstrom I, Schweißspannung U, etc.) des durchgeführten Schweißprozesses zu synchronisieren. Über die Roboter-Steuerungseinheit 11 kann dann sowohl der mit der durchgeführte Schweißprozess, als auch die Bewegung des Roboters 3 gesteuert und aufeinander abgestimmt werden. Natürlich ist das wiederum nur beispielhaft zu verstehen und die Vorschubeinheit 6 könnte auch ein Teil des Schweißgeräts 2 sein, beispielsweise im Schweißgerät 2 integriert sein. Das kann der Fall sein, wenn beispielsweise kein Schweißroboter 3 verwendet wird, sondern der Schweißbrenner 4 von einem Benutzer manuell geführt wird.

Natürlich könnten auch mehrere Vorschubeinheiten 6 vorgesehen sein, z.B. eine zusätzliche (nicht dargestellte) Vorschubeinheit am Schweißbrenner 4, um die Vorschubgeschwindigkeit dynamischer steuern bzw. regeln zu können. Dies kann insbesondere zur Durchführung des bekannten CMT-Schweißprozesses vorteilhaft sein, um den Drahtvorschub möglichst schnell zwischen positivem Drahtvorschub in Richtung zum Werkstück W und negativem Drahtvorschub in Richtung vom Werkstück W weg zu ändern. Die Steuerungseinheit 7 und/oder die Roboter-Steuerungseinheit 11 könnten natürlich wiederum auch von einer (nicht dargestellten) übergeordneten Steuerungseinheit angesteuert werden, beispielsweise um die Schweißverfahren und Schweißprozesse von mehreren Schweißvorrichtungen 1 zentral zu steuern und miteinander zu synchronisieren.

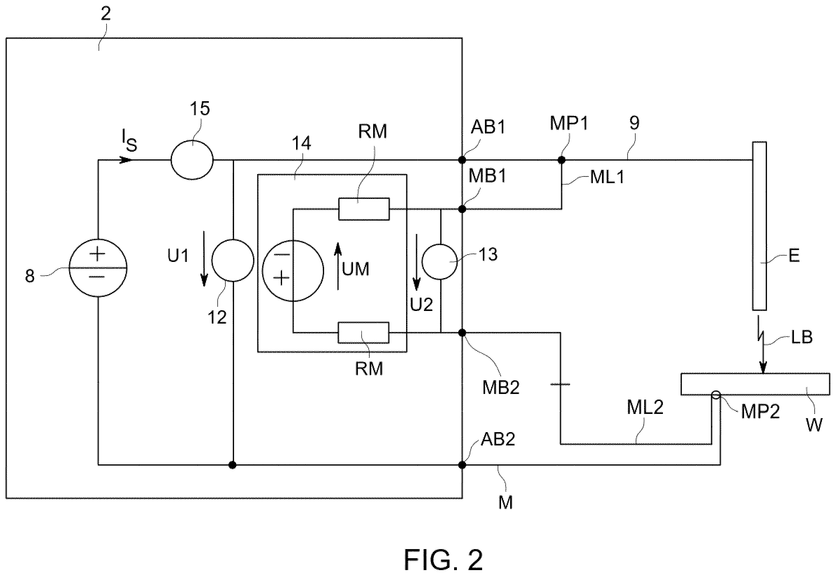

In der Schweißvorrichtung 1, beispielsweise im Schweißgerät 2, ist in bekannter Weise eine Schweißstromquelle 8 mit einer ersten Anschlussbuchse AB1 und einer zweite Anschlussbuchse AB2 vorgesehen. Die erste Anschlussbuchse AB1 und eine zweite Anschlussbuchse AB2 sind mit der Schweißstromquelle 8 elektrisch verbunden. An die erste Anschlussbuchse AB1 kann der Schweißbrenner 4 mittels einer Schweißleitung 9 angeschlossen werden. Die zweite Anschlussbuchse AB2 kann über einer Masseleitung M mit dem Werkstück W verbunden werden. Unter den Anschlussbuchsen AB1, AB2 ist im Rahmen der Erfindung sowohl eine lösbare Verbindung, als auch eine fixe, also nicht lösbare Anbindung zu verstehen. In der Regel werden als Anschlussbuchsen AB1, AB2 aber lösbare, vorzugsweise genormte Kupplungen verwendet. Üblicherweise ist die erste Anschlussbuchse AB1 als Pluspol ausgebildet und die zweite Anschlussbuchse AB2 als Minuspol, wie in Fig.1 dargestellt ist. Grundsätzlich wäre aber auch eine Umpolung der Anschlussbuchsen AB1, AB2 durch die Schweißstromquelle 8 möglich. Über die Schweißleitung 9 versorgt die Schweißstromquelle 2 den Schweißbrenner 4 in bekannter Weise mit dem benötigten Schweißstrom I (Fig.2). Dazu kann z.B. eine Kontakthülse 4a am Schweißbrenner 4 vorgesehen sein, die mit der Schweißleitung 9 verbunden ist und über die der Schweißdraht elektrisch kontaktiert wird.

Bekanntermaßen kann die Schweißleitung 9 auch in einem Schlauchpaket P geführt werden, in welchem neben der Schweißleitung 9 auch noch weitere Leitungen vorgesehen sein können, welche für den Schweißvorgang notwendig oder vorteilhaft sind. Meist wird zur Durchführung eines Schweißprozesses auch ein (aktives oder inertes) Schutzgas verwendet, um das Schmelzbad von der Umgebung abzuschirmen und um eine Oxidation zu verhindern. Das Schutzgas kann dem Schweißbrenner 4 beispielsweise von einem (nicht dargestellten) Schutzgasbehälter über eine geeignete Schutzgasleitung zugeführt werden, die ebenfalls im Schlauchpaket P geführt werden kann. Natürlich wäre aber auch eine separate Zuführung möglich. Es kann dabei auch ein Druckregler, beispielsweise in Form einer am Schutzgasbehälter angeordneten Flaschenarmatur, vorgesehen sein, der z.B. von der Steuerungseinheit 7 gesteuert werden kann, um den Durchfluss des Schutzgases zu steuern. Weiters kann über das Schlauchpaket P gegebenenfalls auch ein Kühlmedium zum Kühlen des Schweißbrenners 4 zugeführt werden. Im Schlauchpaket P können darüber hinaus auch noch Steuerleitungen vorgesehen sein, beispielsweise um die oben beschriebene Vorschubeinheit zu steuern, die ggf. zusätzliche am Schweißbrenner 4 angeordnet sein kann.

Im dargestellten Beispiel verbindet das Schlauchpaket P die erste Anschlussbuchse AB1 des Schweißgeräts 2 mit einer Roboter-Anschlussbuchse 10 des Schweißroboters 3. Zwischen Roboter-Anschlussbuchse 10 des Schweißroboters 3 und dem Schweißbrenner 4 werden die Schweißleitung 9 und die ggf. weiteren Leitungen innerhalb des Roboterarms 3a geführt. Natürlich könnte das Schlauchpaket P aber auch direkt mit dem Schweißbrenner 4 verbunden sein, wie in Fig.1 anhand des gestrichelten Schlauchpakets P' angedeutet ist. Bei einer manuellen Schweißvorrichtung 1, bei welcher der Schweißbrenner 4 von Hand geführt wird (anstelle von einem Schweißroboter 3), kann der Schweißbrenner 4 z.B. direkt über das Schlauchpaket P mit dem Schweißgerät 2 verbunden sein, in der die Schweißstromquelle 8 vorgesehen ist. Dies ist in der Regel bei WIG-Schweißvorrichtungen der Fall oder bei MIG/MAG-Schweißvorrichtungen, bei welchen die Vorschubeinheit 6 im Schweißgerät 2 integriert ist.

Bei den meisten manuellen MIG/MAG-Schweißvorrichtungen ist der Schweißbrenner 4 allerdings mit einer separaten Vorschubeinheit 6 verbunden, beispielsweise über ein erstes Schlauchpaket, und die Vorschubeinheit 6 ist wiederum z.B. über ein zweites Schlauchpaket mit dem Schweißgerät 2 verbunden. Der Systemaufbau ist somit ähnlich, wie jener der in Fig.1 dargestellten Schweißvorrichtung mit Schweißroboter. Im dargestellten Beispiel ist die Vorschubeinheit 6 am Schweißroboter 3 angeordnet. Die abschmelzende Elektrode E (der Schweißdraht) wird dem Schweißbrenner 4 im gezeigten Beispiel daher nicht über das Schlauchpaket P zugeführt, sondern separat. Am oder im Roboterarm 3a kann der Schweißdraht beispielsweise wieder gemeinsam mit der Schweißleitung und ggf. weiteren Leitungen geführt sein. An der Kontaktbuchse 4a kann der Schweißdraht von der Schweißleitung 9 elektrisch kontaktiert werden.

Um einen Schweißprozess (z.B. Impulsschweißprozess, CMT-Schweißprozess, Sprühlichtbogen-Schweißprozess, etc.) durchzuführen wird dem Werkstück W mittels der Masseleitung M ein erstes elektrisches Potential (üblicherweise der Minuspol) angelegt und über die Schweißleitung 9 wird an den Schweißdraht als Elektrode E ein zweites elektrisches Potential (üblicherweise der Pluspol) angelegt. Nach Zünden eines Lichtbogens LB (Fig.2) zwischen dem freien Ende des Schweißdrahts (oder der nicht abschmelzenden Elektrode beim WIG-Schweißverfahren) und dem Werkstück W wird ein Schweißstromkreis geschlossen und es fließt ein Schweißstrom I. Durch den Lichtbogen LB werden der Schweißdraht und ein Teil des Werkstücks W aufgeschmolzen, wodurch sich eine stoffschlüssige Verbindung zwischen dem Schweißdraht und dem Werkstück W ergibt.

Während des Schweißprozesses steuert die Steuerungseinheit 7 die Schweißstromquelle 8, um bestimmte elektrische Schweißparameter einzustellen, wie z.B. die Schweißspannung U, den Schweißstrom I, einer Frequenz f, usw. Zusätzlich kann die Steuerungseinheit 7 weitere Einheiten ansteuern, um z.B. weitere nicht-elektrische Schweißparameter einzustellen, beispielsweise die Vorschubeinheit/en 6 und den Druckregler des Schutzgasbehälters zur Steuerung der Vorschubgeschwindigkeit des Schweißdrahts und der Schutzgasmenge. Die einzustellenden Schweißparameter hängen im Wesentlichen vom durchzuführenden Schweißprozess ab können allgemein als bekannt angesehen werden. Je nach durchgeführtem Schweißprozess können die Schweißparameter natürlich qualitativ und quantitativ variieren.

In der Schweißvorrichtung 1, beispielsweise am Schweißgerät 2, kann auch eine (nicht dargestellte) Benutzerschnittstelle vorgesehen sein, die mit der Steuerungseinheit 7 kommuniziert. Über die Benutzerschnittstelle kann ein Benutzer bestimmte Einstellungen vornehmen. Beispielsweise kann ein bestimmter Schweißprozess ausgewählt werden und es können bestimmte Schweißparameter gewählt und/oder eingestellt werden. Es können beispielsweise auch vordefinierte Schweißprogramme mit bestimmten voreingestellten Schweißparametern in der Steuerungseinheit 7 hinterlegt sein, welche vom Benutzer über die Benutzerschnittstelle ausgewählt werden können. In der dargestellten Schweißvorrichtung 1 mit einem Schweißroboter 3 könnte natürlich auch eine übergeordnete Roboter-Steuerungseinheit 11 vorgesehen sein, die in geeigneter Weise mit der Steuerungseinheit 7 des Schweißgeräts 7 kommuniziert. In diesem Fall könnte die Steuerung des Schweißprozesses und die Einstellung von Schweißparametern usw. von einem Benutzer auch über die Roboter-Steuerungseinheit 11 bzw. eine damit verbundene Benutzerschnittstelle erfolgen.

In der Schweißvorrichtung 1, hier im Schweißgerät 2, ist weiters eine erste Spannungsmesseinrichtung 12 vorgesehen, um ein erstes elektrisches Schweißspannungssignal U1 zwischen den Anschlussbuchsen AB1, AB2 zu messen. Weiters sind in der Schweißvorrichtung 1 im dargestellten Beispiel auch zwei Spannungsmessbuchsen MB1, MB2 zum Anschluss jeweils einer Messleitung ML1, ML2 und eine zweite Spannungsmesseinrichtung 13 zum Messen eines zweiten elektrischen Schweißspannungssignals U2 zwischen den Spannungsmessbuchsen MB1, MB2 vorgesehen. Die erste und/oder zweite Spannungsmesseinrichtung 12, 13 können als separate Einheit ausgebildet sein, wie in Fig.1 dargestellt ist, könnten aber auch in geeigneter Weise der Steuerungseinheit 7 integriert sein.

Die Steuerungseinheit 7 und/oder die Spannungsmesseinrichtungen 12, 13 können in Form einer geeigneten Hardware und/oder Software ausgebildet sein. Im dargestellten Beispiel ist die zweite Spannungsmesseinrichtung 13 beispielsweise im Schweißgerät 2 integriert und die beiden Spannungsmessbuchsen MB1, MB2 sind ebenfalls am Schweißgerät 2 vorgesehen, z.B. an einem Gehäuse des Schweißgeräts 2. Die Messleitungen ML1, ML2 können somit unmittelbar mit dem Schweißgerät 2 verbunden werden. Grundsätzlich wäre es aber ausreichend, wenn in der Schweißvorrichtung 1 nur eine Spannungsmessbuchse MB1 oder MB2 vorgesehen ist. Die zweite Spannungsmesseinrichtung 13 wäre in diesem Fall dazu ausgebildet, das zweite Schweißspannungssignal U2 zwischen der verfügbaren Spannungsmessbuchse MB1, MB2 und einer der Anschlussbuchsen AB1, AB2 zu erfassen.

Wie in Fig.1 dargestellt, kann in der Schweißvorrichtung 1 eine externe Vorschubeinheit 6 zum Zuführen des Schweißdrahts zum Schweißbrenner 4 vorgesehen sein, die von der Schweißstromquelle 8 räumlich getrennt angeordnet ist. Das kann sowohl bei der dargestellten Verwendung eines Schweißroboters 3, als auch beim manuellen Schweißen der Fall sein. Die zweite Spannungsmesseinrichtung 13 und die beiden Spannungsmessbuchsen MB1, MB2 (oder die eine Spannungsmessbuchse MB1 oder MB2) könnten hierbei beispielsweise auch an der Vorschubeinheit 6 vorgesehen sein und die Spannungsmesseinrichtung 13 könnte über eine geeignete Kommunikationsverbindung mit der Steuerungseinheit 7 verbunden sein, um das zweite elektrische Schweißspannungssignals U2 zu übermitteln. Als Kommunikationsverbindung kann beispielsweise ein bekannter Datenbus verwendet werden, um das zweite Schweißspannungssignal U2 mit einem möglichst geringen zeitlichen Verzug zu übertragen. Natürlich könnte die Vorschubeinheit 6 aber in bekannter Weise auch mit der Schweißstromquelle 8 baulich vereint sein und beispielsweise gemeinsam mit der Schweißstromquelle 8 und ggf. weiteren Komponenten (Steuerungseinheit 7, Spannungsmesseinrichtungen 12, 13, usw.) im Gehäuse des Schweißgeräts 2 integriert sein.

Die Steuerungseinheit 7 ist dazu ausgebildet, zumindest eines der Schweißspannungssignale U1, U2 zur Ermittlung von Steuerungsparametern zur Steuerung des Schweißprozesses zu verwenden und die Schweißstromquelle 8 in Abhängigkeit der ermittelten Steuerungsparameter zu steuern. Beispielsweise kann dazu ein geeigneter Regler in der Steuerungseinheit 7 vorgesehen sein, der zumindest eines der Schweißspannungssignale U1, U2 als Istwert der Regelung verwendet. Als Sollwert kann z.B. eine entsprechend eines gewünschten Schweißprozesses vorgegebene Schweißspannung U des Schweißstromkreises verwendet werden. Der Regler berechnet daraus entsprechend eines bestimmten Regelgesetzes eine Stellgröße als Steuerungsparameter. Die Steuerungseinheit 7 kann dann die Schweißstromquelle 8 mit der ermittelten Stellgröße ansteuern, beispielsweise um den Sollwert der Schweißspannung U einzustellen.

Gemäß der Erfindung ist nun vorgesehen, dass die Steuerungseinheit 7 in einem Normalbetriebsmodus das erste Schweißspannungssignal U1 der ersten Spannungsmesseinrichtung 12 ignoriert und das zweite Schweißspannungssignal U2 der zweiten Spannungsmesseinrichtung 13 zur Ermittlung der Steuerungsparameter verwendet. Die Steuerungseinheit 7 ist weiters dazu vorgesehen, anhand des zweiten Schweißspannungssignals U2 einen Fehlerzustand im zweiten Schweißspannungssignal U2 zu erkennen, wie nachfolgend noch näher erläutert wird. Wenn die Steuerungseinheit 7 den Fehlerzustand im zweiten Schweißspannungssignal U2 erkennt, wechselt die Steuerungseinheit 7 innerhalb einer möglichst kurzen Zeit automatisch in einen Notbetriebsmodus, ohne dass der Schweißprozess unterbrochen wird. Im Notbetriebsmodus ignoriert die Steuerungseinheit 7 nun das zweite Schweißspannungssignal U2 der zweiten Spannungsmesseinrichtung 12 und verwendet stattdessen das erste Schweißspannungssignal U1 der ersten Spannungsmesseinrichtung 12 zur Ermittlung der Steuerungsparameter.

Für die Durchführung des Schweißprozesses wird somit standardmäßig das zweite Schweißspannungssignal U2 verwendet und erst im Fehlerfall wird der Notbetriebsmodus automatisch aktiviert und es wird auf das erste Schweißspannungssignal U1 zurückgegriffen. Für das Erkennen des Fehlerzustands und das Umschalten vom Normalbetriebsmodus in den Notbetriebsmodus ist kein Benutzereingriff erforderlich. Im Notbetriebsmodus kann natürlich ggf. auch der eingangs erwähnte RL-Abgleich mittels eines geeigneten Schweißkreismodells durchgeführt werden, das z.B. in der Steuerungseinheit 7 implementiert sein kann. Ein Fehlerzustand im zweiten Schweißspannungssignal U2 der zweiten Spannungsmesseinrichtung 13 liegt beispielsweise vor, wenn sich eine Messleitung ML1, ML2 von der jeweiligen Spannungsmessbuchse MB1, MB2 löst oder wenn eine Messleitung ML1, ML2 bricht oder teilweise beschädigt wird. Unter dem Fehlerzustand des zweiten Schweißspannungssignals U2 ist im Rahmen der Erfindung allgemein ein Zustand zu verstehen, in dem zumindest temporärer kein Schweißspannungssignal U2 mehr erfasst wird oder das erfasste Schweißspannungssignal U2 zumindest temporärer von einem aufgrund des durchgeführten Schweißprozesses erwarteten Wert abweicht. Unter temporär kann beispielsweise ein bestimmter vorgegebener oder einstellbarer Zeitraum verstanden werden.

Im Betrieb der Schweißvorrichtung 1 ist vorteilhafterweise eine erste Messleitung ML1 an der ersten Spannungsmessbuchsen MB1 angeschlossen und an der anderen Spannungsmessbuchse MB2 ist eine zweite Messleitung ML2 angeschlossen, wie in Fig.1 dargestellt ist. Die Anschlussbuchsen AB1, AB2 und die Spannungsmessbuchsen MB1, MB2 können beispielswiese an einem Gehäuse des Schweißgeräts 2 vorgesehen sein, wie in Fig.1 dargestellt ist. Wenn eine externe Vorschubeinheit 6 vorgesehen ist, können die Spannungsmessbuchsen MB1, MB2 (oder die eine Spannungsmessbuchse MB1 oder MB2) wie erwähnt aber auch direkt an der Vorschubeinheit 6 vorgesehen sein. Wenn die zweite Spannungsmesseinrichtung 13 im Schweißgerät 2 vorgesehen ist, dann kann/können die Messleitung/en ML1, ML2 durch die Vorschubeinheit 6 durchgeschleift werden. Wenn die zweite Spannungsmesseinrichtung 13 in der Vorschubeinheit 6 vorgesehen ist, dann kann direkt das zweite Schweißspannungssignal U2 über die Kommunikationsverbindung an die Steuerungseinheit 7 übertragen werden, die vorzugsweise ebenfalls im Schweißgerät 2 angeordnet ist. Analog zu den Anschlussbuchsen AB1, AB2 ist im Rahmen der Erfindung unter den Spannungsmessbuchsen MB1, MB2 sowohl eine lösbare Kupplung oder Steckverbindung, als auch eine fixe, d.h. nicht lösbare Verbindung zu verstehen.

Die erste Messleitung ML1 ist vorzugsweise mit einem zwischen der ersten Anschlussbuchse AB1 und der Elektrode E des Schweißbrenners 4 liegenden ersten Spannungsmesspunkt MP1 in der Schweißleitung 9 elektrisch verbunden. Die zweite Messleitung ML2 ist vorzugsweise mit einem zweiten Spannungsmesspunkt MP2 in der Masseleitung M elektrisch verbunden oder direkt mit dem Werkstück W. Dadurch kann das zweite Schweißspannungssignal U2 näher am Lichtbogen LB gemessen werden, als das erste Schweißspannungssignal U1, das zwischen den beiden Anschlussbuchsen AB1, AB2 gemessen wird. Grundsätzlich gilt dabei, je näher das zweite Schweißspannungssignal U2 am Lichtbogen LB abgegriffen werden kann, desto genauer entspricht die gemessene Spannung der interessierenden Lichtbogenspannung, weil der Spannungsabfall in der Schweißleitung 9 geringer ist. Die Verbindung der Messleitungen ML1, ML1 mit den Spannungsmesspunkten MP1, MP2 kann wiederum fix oder lösbar sein.

Wie oben erwähnt, kann in der Schweißvorrichtung 1 auch nur eine Spannungsmessbuchse MB1 oder MB2 vorgesehen sein, im gezeigten Beispiel z.B. nur die erste Spannungsmessbuchse MB1 oder die zweite Spannungsmessbuchse MB2. Die erste Spannungsmessbuchse MB1 könnte, so wie dargestellt, mittels einer ersten Messleitung ML1 mit dem ersten Spannungsmesspunkt MP1 der Schweißleitung 9 verbunden sein. Die zweite Spannungsmesseinrichtung 13 misst das zweite Schweißspannungssignal U2 in diesem Fall zwischen dem ersten Spannungsmesspunkt MP1 und der zweiten Anschlussbuchse AB2, die mit der Masseleitung M mit dem Werkstück W verbunden ist. Es könnte aber auch nur die zweite Spannungsmessbuchse MB2 vorgesehen sein und diese könnte, so wie dargestellt, über eine zweite Messleitung ML2 mit dem zweiten Spannungsmesspunkt MP2 in der Masseleitung M oder direkt mit dem Werkstück W elektrisch verbunden sein.

Die zweite Spannungsmesseinrichtung 13 misst das zweite Schweißspannungssignal U2 in diesem Fall zwischen dem zweiten Spannungsmesspunkt MP2 und der ersten Anschlussbuchse AB1, die über die Schweißleitung 9 mit dem Schweißbrenner 4 verbunden ist. Dadurch kann das zweite Schweißspannungssignal U2 auch mit nur einer Spannungsmessbuchse MB1, MB2 und einer Messleitung ML1, ML2 näher am Lichtbogen gemessen werden. Je nach Ausführung bleibt allerdings der Spannungsabfall in der Schweißleitung 9 oder der Masseleitung unberücksichtigt. Es ist daher vorteilhaft, wenn in der Schweißvorrichtung 1, so wie in Fig.1 dargestellt, zwei Spannungsmessbuchsen MB1, MB2 vorgesehen sind, die jeweils mit einer Messleitung ML1, ML2 mit der Schweißleitung 9 bzw. der Masseleitung M oder dem Werkstück W verbunden sind.

Im gezeigten Beispiel liegt der erste Spannungsmesspunkt MP1 beispielsweise am Roboterarm 3a in der Nähe des Schweißbrenners 4 und ist somit von außen nicht oder nur schlecht zugänglich. Es kann daher vorteilhaft sein, wenn eine geeignete Messleitungsanschlussbuchse 16 am Schweißroboter 3 vorgesehen ist, an die die erste Messleitung ML1 in einfacher Weise angeschlossen werden kann. Der zwischen der Messleitungsanschlussbuchse 16 und dem ersten Spannungsmesspunkt MP1 verlaufende Abschnitt der ersten Messleitung ML1 ist hierbei ein Teil des Schweißroboters 3 und kann im oder am Roboterarm 3a angeordnet sein. Der zweite Spannungsmesspunkt MP2 liegt hier direkt am Werkstück W und kann z.B. als geeignete Klemme ausgebildet sein.

Der erste Spannungsmesspunkt könnte aber natürlich auch an einer von außen leichter zugänglichen Stelle vorgesehen sein, beispielsweise an der Roboter-Anschlussbuchse 10, wie durch den Spannungsmesspunkt MP1' in Fig.1 angedeutet ist. Das zweite Schweißspannungssignal U2 würde in diesem Fall allerdings im Vergleich zum ersten Spannungsmesspunkt MP1 am Roboterarm 3a weiter vom Lichtbogen LB entfernt abgegriffen werden. Daraus resultiert aufgrund der größeren Leitungslänge der Schweißleitung 9 auch ein größerer Spannungsabfall und folglich eine größere Abweichung zwischen der gemessenen Schweißspannung und der tatsächlichen Lichtbogenspannung. Vorteilhafterweise liegt der erste Spannungsmesspunkt MP1 daher möglichst nahe am Lichtbogen LB. Wenn eine geeignete Masseleitung M vorgesehen ist, kann auch der zweite Spannungsmesspunkt MP2 direkt an der Masseleitung M vorgesehen sein. Auch hier gilt, dass es vorteilhaft ist, wenn der zweite Spannungsmesspunkt MP2 möglichst nahe am Lichtbogen LB liegt. Bei einer manuellen Schweißvorrichtung mit separater Vorschubeinheit 6 kann der erste Spannungsmesspunkt MP1' beispielsweise ebenfalls an der Vorschubeinheit 6 vorgesehen sein, analog wie in Fig.1 angedeutet ist. Der zweite Spannungsmesspunkt MP2 könnte beispielsweise wiederum direkt am Werkstück W liegen.

Als Messleitungen ML1, ML2 werden vorzugsweise spezielle Messleitungen mit einem möglichst geringen Ohm'schen Widerstand verwendet, vorzugsweise kleiner als 0,5 Ω. Da bei der Spannungsmessung kein oder nur ein vernachlässigbar geringer Strom in den Messleitungen fließt, ist der Spannungsabfall über die Messleitungen ML1, ML2 im Vergleich zu einem Spannungsabfall über die Schweißleitung 9 sehr gering und kann daher vernachlässigt werden. Die Länge der Messleitungen ML1, ML2 trägt somit nur unwesentlich zum Spannungsabfall bei. Weiters kann es vorteilhaft sein, wenn die erste Messleitung ML1 und die zweite Messleitung ML2 zumindest abschnittsweise verdrillt sind. Dadurch kann bekanntermaßen die induktive Kopplung reduziert werden, also die Spannungsinduktion in die Messleitungen ML1, ML2 durch andere stromführende Leitungen (z.B. Schweißleitungen 9, Masseleitungen M) in der Nähe der Messleitungen ML1, ML2. In Fig.1 ist dies durch den strichpunktierten Verdrillungsbereich B angedeutet, der an die Spannungsmessbuchsen MB1, MB2 anschließt. Hierbei gilt ebenfalls, dass es vorteilhaft ist, wenn die Messleitungen ML1, ML2 über einen möglichst großen Bereich ihrer Länge verdrillt sind. Im dargestellten Beispiel endet der Verdrillungsbereich B an der Stelle, an der sich die Messleitungen ML1, ML2 in Richtung Roboterarm 3a bzw. in Richtung Werkstück W aufteilen. Ggf. könnte das Masse-Potential auch weiter in die Nähe des Roboterarms 3a oder des Schweißbrenners 4 geführt werden, sodass eine Verdrillung der Messleitungen ML1, ML2 über einen größeren Bereich ihrer Länge ermöglicht wird.

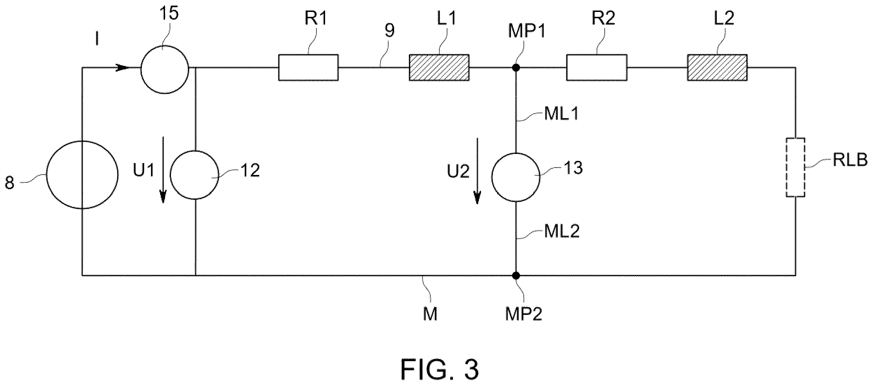

Anhand Fig.2 und Fig.3 werden nachfolgend zwei Varianten für die Erkennung des Fehlerzustandes im zweiten Schweißspannungssignal U2 beschrieben. Die beiden Varianten können alternativ verwendet werden, können aber natürlich auch redundant verwendet werden. In Fig.2 ist ein Ersatzschaltbild des Schweißstromkreises aus Fig.1 dargestellt. Der Schweißstromkreis wird nach dem Zünden eines Lichtbogens LB zwischen der Elektrode E und dem Werkstück W geschlossen, sodass ein Schweißstrom I fließt, der von der Schweißstromquelle 8 bereitgestellt. Die Schweißparameter (Schweißstrom I, Schweißspannung U, usw.) werden während der Durchführung des Schweißprozesses von der Steuerungseinheit 7 eingestellt, insbesondere geregelt. Das erste Schweißspannungssignal U1 wird mittels der ersten Spannungsmesseinrichtung 12 der Schweißvorrichtung 1 zwischen den in Fig.2 nicht dargestellten Anschlussbuchsen AB1, AB2 (siehe Fig.1) gemessen. Das zweite Schweißspannungssignal U2 wird mittels der zweiten Spannungsmesseinrichtung 13 der Schweißvorrichtung 1 zwischen dem ersten Spannungsmesspunkt MP1 in der Schweißleitung 9 und dem zweiten Spannungsmesspunkt MP2 in der Masseleitung M (oder direkt am Werkstück W erfasst. Die zweite Spannungsmesseinrichtung 13 ist hier beispielhaft innerhalb des Schweißgeräts 2 angeordnet. Zusätzlich kann natürlich auch eine geeignete Strommesseinrichtung 15 zur Messung des Schweißstroms I in der Schweißvorrichtung 1, beispielsweise im Schweißgerät 2, vorgesehen sein, wie in Fig.2 und Fig.3 angedeutet ist.

Zur Erkennung des Fehlerzustands im zweiten Schweißspannungssignal U2 kann in der Schweißvorrichtung 1 zusätzlich zur Schweißstromquelle 8 eine Messspannungsquelle 14 vorgesehen sein. Die Messspannungsquelle 14 ist hier mit den beiden Spannungsmessbuchsen MB1, MB2 elektrisch verbunden, um eine Messspannung UM an die Messleitungen ML1, ML2 anlegen zu können. Wenn nur eine Spannungsmessbuchse MB1 oder MB2 vorgesehen ist, dann ist die Messspannungsquelle 14 mit der jeweiligen Spannungsmessbuchse MB1, MB2 und einer der Anschlussbuchsen AB1, AB2 verbunden. Die Steuerungseinheit 7 kann den Fehlerzustand im zweiten Schweißspannungssignal U2 der zweiten Spannungsmesseinrichtung 13 hierbei anhand der von der Messspannungsquelle 14 erzeugten elektrischen Messspannung UM erkennen. Wenn während der Durchführung des Schweißprozesses ein Fehlerzustand eintritt, beispielsweise weil sich eine Messleitung ML1, ML2 von der jeweiligen Spannungsmessbuchse MB1, MB2 oder vom jeweiligen Messpunkt MP1, MP2 löst, oder eine Messleitung ML1, ML2 bricht, dann misst die zweite Spannungsmesseinrichtung 13 nur noch die Messspannung UM, die von der Messspannungsquelle 14 bereitgestellt wird. Die Messspannung UM unterscheidet sich vorteilhafterweise qualitativ und quantitativ von der Schweißspannung U und ist bekannt. Als Messspannung UM kann beispielsweise ein bekanntes charakteristisches Spannungssignal mit einer konstanten Spannung oder einer alternierenden Spannung einer bestimmten Frequenz vorgegeben sein. Dadurch kann die Steuerungseinheit 7 in einfacher Weise erkennen, wann ein Fehlerzustand vorliegt, weil im Fehlerzustand nur noch die charakteristische Spannung gemessen wird.

Um eine möglichst einfache und rasche Erkennung des Fehlerzustands zu ermöglichen, ist es vorteilhaft, wenn die Messspannungsquelle 14 eine gegenteilige elektrische Polung aufweist wie die Schweißstromquelle 8, wie in Fig.2 dargestellt ist. Dadurch wechselt im Fehlerfall das Vorzeichen im zweiten Schweißspannungssignal U2, das von der zweiten Spannungsmesseinrichtung 13 erfasst wird. Die Erkennung des Fehlerzustands kann dabei beispielsweise innerhalb 20-50µs erfolgen.

Weiters kann es vorteilhaft sein, wenn die Messspannungsquelle 14 hochohmig an zumindest eine Spannungsmessbuchse MB1, MB2 angeschlossen ist. Zusätzlich oder alternativ kann es vorteilhaft sein, wenn die Messspannungsquelle 14 über zumindest einen bekannten Ohm'schen Widerstand RM an zumindest eine Spannungsmessbuchse MB1, MB2 angeschlossen ist. Unter hochohmig ist bekanntermaßen ein möglichst hoher Ohm'scher Widerstand zu verstehen, z.B. >100kΩ. In der Schaltung gemäß Fig.2 ist beispielsweise ein Ohm'schen Widerstand RM mit 100 kΩ zwischen dem Pluspol der Messspannungsquelle 14 und der ersten Spannungsmessbuchse MB1 angeordnet und es ist ein Ohm'schen Widerstand RM mit 100 kΩ zwischen dem Minuspol der Messspannungsquelle 14 und der zweiten Spannungsmessbuchse MB2 angeordnet. Durch den hochohmigen Anschluss ist die Messspannung UM im Normalbetriebsmodus (ohne Fehlerzustand) für die Erfassung des zweiten Schweißspannungssignals U2 im Schweißstromkreis vernachlässigbar, sodass keine wesentliche Verfälschung des zweiten Schweißspannungssignals U2 resultiert. Wenn der Ohm'sche Widerstand RM der Messspannungsquelle 14 alternativ oder zusätzlich bekannt ist, kann der Spannungsabfall an den Widerständen RM berechnet und bei der Erfassung des zweiten Schweißspannungssignals U2 berücksichtigt werden, sodass das zweite Schweißspannungssignal U2 ggf. korrigiert werden kann.

Die Erkennung des Fehlerzustands im zweiten Schweißspannungssignal U2 der zweiten Spannungsmesseinrichtung 13 kann aber grundsätzlich auch ohne zusätzlicher Messspannungsquelle 14 erfolgen. Dazu kann beispielsweise ein Schweißstromkreismodell in der Steuerungseinheit 7 hinterlegt sein, über welches der Fehlerzustand erkannt werden kann. Ein beispielhaftes Schweißstromkreismodell ist in Fig.3 dargestellt. Das Schweißstromkreismodell enthält vorzugsweise zumindest ein Modell der Schweißleitung 9, wobei das Modell der Schweißleitung 9 zumindest einen Ohm'schen Widerstand Ri und zumindest eine Induktivität Li enthält. Im dargestellten Beispiel in Fig.3 weist das Modell der Schweißleitung 9 beispielsweise zwei Ohm'sche Widerstände R1, R2 und zwei Induktivitäten L1, L2 auf. Der erste Widerstand R1 und die erste Induktivität L1 bilden den Teil der Schweißleitung 9 zwischen der ersten Anschlussbuchse AB1 und dem ersten Messpunkt MP1 ab (siehe dazu auch Fig.1 + Fig.2). Der zweite Widerstand R2 und die zweite Induktivität L2 bilden den Teil der Schweißleitung 9 zwischen dem ersten Messpunkt MP1 und der Elektrode E ab. Der Lichtbogen LB kann ebenfalls in Form eines Ohm'schen Widerstandes RLB abgebildet sein.

Natürlich könnten im Schweißstromkreismodell auch noch weitere Komponenten wie z.B. die Messleitungen ML1, ML2, die Anschlussbuchsen AB1, AB2, die Spannungsmessbuchsen MB1, MB2, die Messpunkte MP1, MP2, berücksichtigt werden, um den tatsächlichen Aufbau der Schweißvorrichtung 1 möglichst realistisch abzubilden. Dazu können wiederum entsprechende Ohm'schen Widerständen R, Induktivitäten L und ggf. weitere elektrische Ersatz-Elemente vorgesehen sein. Um das Schweißstromkreismodell möglichst gut an einen Schweißstromkreis der real aufgebauten Schweißvorrichtung 1 anzupassen, kann es weiters vorteilhaft sein, wenn Modellparameter des Schweißstromkreismodells einstellbar oder automatisch identifizierbar sind. Beispielsweise können veränderliche Ohm'schen Widerständen R, Induktivitäten L, usw. vorgesehen sein, die von einem Benutzerje nach konkret realisiertem Aufbau verändert werden können, beispielsweise über die Benutzerschnittstelle am Schweißgerät 2 oder über eine übergeordnete Steuerungseinheit, z.B. die Roboter-Steuerungseinheit 11.

Eine automatische Identifizierung der Modellparameter des Schweißkreismodels kann z.B. durch einen durch einen Abgleich vor der Durchführung des Schweißprozesses erfolgen. Bei diesem Abgleich wird allerdings nicht tatsächlich geschweißt, sondern es wird lediglich der Schweißbrenner 4 zum Werkstück W bewegt, sodass Kontaktrohr 4a die Schweißstelle des Werkstücks W berührt. Dabei wird mittels der Steuerungseinheit 7 ein Abgleichalgorithmus durchgeführt um die Modellparameter (z.B. Induktivität und Ohm'scher Widerstand) des Schweißstromkreismodells zu ermitteln. Bei Schweißprozessen, bei welchen sich die Höhe des Schweißstroms I zeitlich ändert (z.B. beim Impulsschweißen), kann ggf. auch während der Durchführung des Schweißprozesses die Induktivität als Modellparameter als bestimmt werden. Dabei wird in den Phasen, in denen die Stromänderung stattfindet, ein aktueller Wert für die Induktivität bestimmt und der Modellparameter kann ggf. unmittelbar aktualisiert werden.

Zur Erkennung des Fehlerzustands im zweiten Schweißspannungssignal U2 der zweiten Spannungsmesseinrichtung 13 vergleicht die Steuerungseinheit 7 das von der zweiten Spannungsmesseinrichtung 13 real gemessene zweite Schweißspannungssignal U2, vorzugsweise kontinuierliche oder in vorgegebenen Zeitschritten, mit dem berechneten zweiten Schweißspannungssignal U2 aus dem Schweißstromkreismodell. Wenn eine vorgegebene oder einstellbare Abweichung erkannt wird, beispielsweise weil sich eine Messleitung ML1, ML2 gelöst hat, gebrochen oder beschädigt ist, schaltet die Steuerungseinheit 7 automatisch vom Normalbetriebsmodus in den Notbetriebsmodus, wobei der Schweißprozess während des Umschaltens fortgesetzt wird. Im Notbetriebsmodus verwendet die Steuerungseinheit 7 anstelle des zweiten Schweißspannungssignal U2 das erste Schweißspannungssignal U1 zur Ermittlung der Steuerungsparameter. Der Schweißprozess kann somit ohne Unterbrechung fortgesetzt und beendet werden. Nach der Beendigung (wenn der Lichtbogen LB erloschen ist) kann eine Fehlerdiagnose an der Schweißvorrichtung 1 durchgeführt werden und der Fehler behoben werden.

Wenn die Fehlerursache beispielsweise eine gelöste Messleitung ML1, ML2 ist, kann die entsprechende Messleitung ML1, ML2 wieder mit der jeweiligen Spannungsmessbuchse MB1, MB2 oder dem Messpunkt MP1, MP2 verbunden werden und ein neuer Schweißprozess kann wieder im Normalbetriebsmodus gestartet werden. Dazu kann beispielsweise vorgesehen sein, dass die Steuerungseinheit 7 nach jedem Start eines Schweißprozesses, also nach dem Zünden des Lichtbogens LB als initiale Einstellung den Normalbetriebsmodus hinterlegt hat. Um größere Fehler in der Schweißnaht zu vermeiden, die während des Zeitraums der Umschaltung aufgrund des falschen oder fehlenden zweiten Schweißspannungssignals U2 resultieren können, erfolgt die die Umschaltung vom Normalbetriebsmodus in den Notbetriebsmodus innerhalb möglichst kurzer Zeit, vorzugweise innerhalb 25-100µs. Wie bereits erwähnt kann im Notbetriebsmodus, in dem das erste Schweißspannungssignal U1 zur Regelung der Schweißspannung herangezogen wird, auch ein bekannter RL-Abgleich erfolgen, bei dem der Spannungsabfall in der Schweißleitung 9 durch ein Modell ermittelt und bei der Erfassung der Schweißspannung berücksichtigt wird.

Dadurch kann auch im Notbetriebsmodus der Spannungsabfall in der Schweißleitung 9 berücksichtig werden. Natürlich könnte auch für längere Zeit im Notbetriebsmodus geschweißt werden, allerdings kann dies unter Umständen zu einer verminderten Schweißqualität führen. Wie eingangs beschrieben, kann dies beispielsweise dann der Fall sein, wenn mehrere parallele Schweißprozesse durchgeführt werden, wobei die Schweißleitungen 9 und Masseleitungen M in räumlicher Nähe verlegt sind. Durch einen zeitlich veränderlichen Schweißstrom in einer Leitung kann es zu einer unerwünschten Spannungsinduktion in einer benachbarten Leitung kommen, was zu einer Verfälschung des ersten Schweißspannungssignals U1 führen kann, das an den Anschlussbuchsen AB1, AB2 gemessen wird. Da im Notbetriebsmodus das ersten Schweißspannungssignals U1 zur Regelung des Schweißprozesses verwendet wird, kann dies folglich zu unerwünschten Abweichungen vom vorgegebenen Schweißprozess und ggf. zu einer unzureichenden Schweißqualität führen. Um diese Probleme zu vermeiden, ist es daher vorteilhaft, wenn möglichst rasch wieder in den Normalbetriebsmodus gewechselt wird, in dem das zweite Schweißspannungssignals U1 zur Regelung des Schweißprozesses herangezogen wird, welches von der induktiven Kopplung der Leitungen im Wesentlichen unbeeinflusst ist.

Abschließend sei nochmals angemerkt, dass die Erfindung natürlich nicht auf die dargestellte Schweißvorrichtung 1 mit Schweißroboter 3 und MSG-Schweißverfahren beschränkt ist. Die Erfindung könnte natürlich auch bei einer Schweißvorrichtung 1 ohne Schweißroboter 3 angewendet werden, die zum manuellen Schweißen per Hand vorgesehen ist. Gleichfalls ist die Erfindung auch nicht auf das MSG-Schweißverfahren beschränkt, sondern könnte natürlich auch bei anderen Schweißverfahren zur Anwendung kommen, beispielsweise beim WIG-Schweißen mit nicht-abschmelzender Elektrode.

## Patentansprüche

1. Schweißvorrichtung (1) zur Durchführung eines Schweißprozesses mit einer Elektrode (E) an einem Werkstück (W), wobei in der Schweißvorrichtung (1) eine Schweißstromquelle (8) mit einer ersten Anschlussbuchse (AB1) zum elektrischen Anschließen eines Schweißbrenners (4) mittels einer Schweißleitung (9) und mit einer zweiten Anschlussbuchse (AB2) zum elektrischen Anschließen eines Werkstücks (W) mittels einer Masseleitung (M) vorgesehen ist, wobei in der Schweißvorrichtung (1) eine erste Spannungsmesseinrichtung (12) zur Erfassung eines ersten elektrischen Schweißspannungssignals (U1) zwischen den Anschlussbuchsen (AB1, AB2) vorgesehen ist, **dadurch gekennzeichnet, dass**
in der Schweißvorrichtung (1) eine Spannungsmessbuchse (MB1, MB2) zum Anschließen einer Messleitung (ML1, ML2) oder zwei Spannungsmessbuchsen (MB1, MB2) zum Anschließen jeweils einer Messleitung (ML1, ML2) vorgesehen sind, wobei in der Schweißvorrichtung (1) eine zweite Spannungsmesseinrichtung (13) zur Erfassung eines zweiten elektrischen Schweißspannungssignals (U2) zwischen der einen Spannungsmessbuchse (MB1, MB2) und einer der Anschlussbuchsen (AB1, AB2) oder zwischen den zwei Spannungsmessbuchsen (MB1, MB2) vorgesehen ist, wobei in der Schweißvorrichtung (1) eine Steuerungseinheit (7) vorgesehen ist, die dazu ausgebildet ist, zumindest eines der Schweißspannungssignale (U1, U2) zur Ermittlung von Steuerungsparametern zur Steuerung oder Regelung des Schweißprozesses zu verwenden und die Schweißstromquelle (8) mit den ermittelten Steuerungsparametern zu steuern,
wobei die Steuerungseinheit (7) dazu ausgebildet ist, in einem Normalbetriebsmodus das erste Schweißspannungssignal (U1) der ersten Spannungsmesseinrichtung (12) zu ignorieren und das zweite Schweißspannungssignal (U2) der zweiten Spannungsmesseinrichtung (13) zur Ermittlung der Steuerungsparameter zu verwenden, dass die Steuerungseinheit (7) weiters dazu ausgebildet ist, anhand des zweiten Schweißspannungssignals (U2) einen Fehlerzustand im zweiten Schweißspannungssignal (U2) zu erkennen und bei Erkennung des Fehlerzustands ohne Unterbrechung des Schweißprozesses in einen Notbetriebsmodus zu wechseln und dass die Steuerungseinheit (7) dazu ausgebildet ist, im Notbetriebsmodus das zweite Schweißspannungssignal (U2) der zweiten Spannungsmesseinrichtung (13) zu ignorieren und das erste Schweißspannungssignal (U1) der ersten Spannungsmesseinrichtung (12) zur Ermittlung der Steuerungsparameter zu verwenden.

2. Schweißvorrichtung (1) nach Anspruch 1, **dadurch gekennzeichnet, dass** ein Schweißbrenner (4) mittels einer Schweißleitung (9) mit der ersten Anschlussbuchse (AB1) elektrisch verbunden ist und eine mit dem Werkstück (W) verbundene oder verbindbare Masseleitung (M) mit der zweiten Anschlussbuchse (AB2) elektrisch verbunden ist **und dass** an der einen Spannungsmessbuchse (MB1) eine erste Messleitung (ML1) angeschlossen ist, die mit einem zwischen der ersten Anschlussbuchse (AB1) und der Elektrode (E) des Schweißbrenners (4) liegenden ersten Spannungsmesspunkt (MP1) in der Schweißleitung (9) elektrisch verbunden ist, wobei die zweite Spannungsmesseinrichtung (13) dazu ausgebildet ist, das zweite elektrische Schweißspannungssignal (U2) zwischen der einen Spannungsmessbuchse (MB1) und der zweiten Anschlussbuchse (AB2) zu erfassen **oder dass** an der einen Spannungsmessbuchse (MB2) eine zweite Messleitung (ML2) angeschlossen ist, die mit einem zweiten Spannungsmesspunkt (MP2) in der Masseleitung (M) elektrisch verbunden ist oder mit dem Werkstück (W) elektrisch verbindbar ist, wobei die zweite Spannungsmesseinrichtung (13) dazu ausgebildet ist, das zweite elektrische Schweißspannungssignal (U2) zwischen der einen Spannungsmessbuchse (MB2) und der ersten Anschlussbuchse (AB1) zu erfassen.

3. Schweißvorrichtung (1) nach Anspruch 1, **dadurch gekennzeichnet, dass** ein Schweißbrenner (4) mittels einer Schweißleitung (9) mit der ersten Anschlussbuchse (AB1) verbunden ist und eine mit dem Werkstück (W) verbundene oder verbindbare Masseleitung (M) mit der zweiten Anschlussbuchse (AB2) verbunden ist, dass an einer der zwei Spannungsmessbuchsen (MB1) eine erste Messleitung (ML1) angeschlossen ist, die mit einem zwischen der ersten Anschlussbuchse (AB1) und der Elektrode (E) des Schweißbrenners (4) liegenden ersten Spannungsmesspunkt (MP1) in der Schweißleitung (9) elektrisch verbunden ist und an der anderen Spannungsmessbuchse (MB2) eine zweite Messleitung (ML2) angeschlossen ist, die mit einem zweiten Spannungsmesspunkt (MP2) in der Masseleitung (M) elektrisch verbunden ist oder mit dem Werkstück (W) elektrisch verbindbar ist, wobei die erste Messleitung (ML1) und die zweite Messleitung (ML2) vorzugsweise zumindest abschnittsweise verdrillt sind.

4. Schweißvorrichtung (1) nach einem der Ansprüche 1 bis 3, **dadurch gekennzeichnet, dass** in der Schweißvorrichtung (1) eine Vorschubeinheit (6) zum Zuführen eines Schweißdrahts zum Schweißbrenner (4) vorgesehen ist, wobei die zweite Spannungsmesseinrichtung (13) und die eine Spannungsmessbuchse (MB1, MB2) oder die zwei Spannungsmessbuchsen (MB1, MB2) an der Vorschubeinheit (6) vorgesehen sind und dass die zweite Spannungsmesseinrichtung (13) zur Übermittlung des zweiten elektrischen Schweißspannungssignals (U2) über eine Kommunikationsverbindung mit der Steuerungseinheit (7) verbunden ist.

5. Schweißvorrichtung (1) nach einem der Ansprüche 1 bis 4, **dadurch gekennzeichnet, dass** in der Schweißvorrichtung (1) eine zusätzliche Messspannungsquelle (14) vorgesehen ist, die mit den zwei Spannungsmessbuchsen (MB1, MB2) verbunden ist oder mit der einen Spannungsmessbuchse (MB1, MB2) und einer der Anschlussbuchsen (AB1, AB2) verbunden ist, wobei die Steuerungseinheit (7) dazu ausgebildet ist, den Fehlerzustand im zweiten Schweißspannungssignal (U2) anhand einer von der Messspannungsquelle (14) erzeugten elektrischen Messspannung (UM) zu erkennen.

6. Schweißvorrichtung (1) nach Anspruch 5, **dadurch gekennzeichnet, dass** die Messspannungsquelle (14) eine gegenteilige elektrische Polung aufweist wie die Schweißstromquelle (8).

7. Schweißvorrichtung (1) nach Anspruch 5 oder 6, **dadurch gekennzeichnet, dass** die Messspannungsquelle (14) an zumindest eine Spannungsmessbuchse (MB1, MB2) hochohmig angeschlossen ist und/oder dass die Messspannungsquelle (14) über zumindest einen bekannten Ohm'schen Widerstand (RM) an zumindest eine Spannungsmessbuchse (MB1, MB2) angeschlossen ist.

8. Schweißvorrichtung (1) nach einem der Ansprüche 1 bis 7, **dadurch gekennzeichnet, dass** in der Steuerungseinheit (7) ein Schweißstromkreismodell hinterlegt ist und dass die Steuerungseinheit (7) dazu ausgebildet ist, den Fehlerzustand im zweiten Schweißspannungssignal (U2) anhand des Schweißstromkreismodells zu erkennen, wobei das Schweißstromkreismodell vorzugsweise zumindest ein Modell der Schweißleitung (9) enthält, wobei das Modell der Schweißleitung (9) vorzugsweise zumindest einen Ohm'schen Widerstand (R1, R2) und zumindest eine Induktivität (L1, L2) enthält.

9. Schweißvorrichtung (1) nach Anspruch 8, **dadurch gekennzeichnet, dass** Modellparameter des Schweißstromkreismodells an den Schweißstromkreis einer real aufgebauten Schweißvorrichtung (1) anpassbar sind.

10. Schweißvorrichtung (1) nach einem der Ansprüche 2 bis 9, **dadurch gekennzeichnet, dass** in der Schweißvorrichtung (1) ein Schweißroboter (3) vorgesehen ist, wobei der Schweißbrenner (4) am Schweißroboter (3) angeordnet ist und vom Schweißroboter (3) bewegbar ist und wobei der erste Spannungsmesspunkt (MP1) am Schweißroboter (3) vorgesehen ist, vorzugsweise im Bereich des Schweißbrenners (4).

11. Verfahren zur Durchführung eines Schweißprozesses mit einer Elektrode (E) an einem Werkstück (W), wobei die Elektrode (E) über eine Schweißleitung (9) mit einer Schweißstromquelle (8) verbunden ist und das Werkstück (W) über eine Masseleitung (M) mit der Schweißstromquelle (8) verbunden ist, wobei nach dem Zünden eines Lichtbogens (LB) zwischen der Elektrode (E) und dem Werkstück (W) ein Schweißstromkreis geschlossen wird, **dadurch gekennzeichnet dass** im Schweißstromkreis ein erstes elektrisches Schweißspannungssignal (U1) und ein zweites elektrisches Schweißspannungssignal (U2) erfasst werden, wobei das zweite elektrische Schweißspannungssignal (U2) näher am Lichtbogen (LB) erfasst wird, als das erste elektrische Schweißspannungssignal (U1), wobei die erfassten Schweißspannungssignale (U1, U2) an eine Steuerungseinheit (7) übermittelt werden und wobei die Steuerungseinheit (7) zumindest eines der Schweißspannungssignale (U1, U2) verwendet, um Steuerungsparameter zur Steuerung oder Regelung des Schweißprozesses zu ermitteln und wobei die Steuerungseinheit (7) die Schweißstromquelle (8) mit den ermittelten Steuerungsparametern steuert, wobei die Steuerungseinheit (7) in einem Normalbetriebsmodus das erste Schweißspannungssignal (U1) ignoriert und das zweite Schweißspannungssignal (U2) zur Ermittlung der Steuerungsparameter verwendet, dass die Steuerungseinheit (7) anhand des zweiten Schweißspannungssignals (U2) einen Fehlerzustand im zweiten Schweißspannungssignal (U2) erkennt und bei Erkennung des Fehlerzustands, vorzugsweise innerhalb 100µs, in einen Notbetriebsmodus wechselt ohne den Schweißprozess zu unterbrechen und dass die Steuerungseinheit (7) im Notbetriebsmodus das zweite Schweißspannungssignal (U2) ignoriert und das erste Schweißspannungssignal (U1) zur Ermittlung der Steuerungsparameter verwendet.

12. Verfahren nach Anspruch 11, **dadurch gekennzeichnet, dass** die Erkennung des Fehlerzustands im zweiten Schweißspannungssignal (U2) anhand eines in der Steuerungseinheit (7) hinterlegten Schweißstromkreismodells des Schweißstromkreises erfolgt.

13. Verfahren nach Anspruch 12, **dadurch gekennzeichnet, dass** das Schweißstromkreismodell zumindest ein Modell der Schweißleitung (9) enthält, wobei das Modell der Schweißleitung (9) vorzugsweise zumindest einen Ohm'schen Widerstand (R1, R2) und zumindest eine Induktivität (L1, L2) enthält.

14. Verfahren nach Anspruch 12 oder 13, **dadurch gekennzeichnet, dass** Modellparameter des Schweißstromkreismodells an einen Schweißstromkreis einer real aufgebauten Schweißvorrichtung (1) angepasst werden.

15. Verfahren nach einem der Ansprüche 11 bis 14, **dadurch gekennzeichnet, dass** mittels einer zusätzlichen Messspannungsquelle (14) eine Messspannung (UM) an den Schweißstromkreis angelegt wird und dass die Steuerungseinheit (7) den Fehlerzustand im zweiten Schweißspannungssignal (U2) anhand der Messspannung (UM) erkennt, wobei die Messspannungsquelle (14) vorzugsweise hochohmig und/oder über einen bekannten Ohm'schen Widerstand (UM) mit dem Schweißstromkreis verbunden wird und wobei an der Messspannungsquelle (14) vorzugsweise eine zur Schweißstromquelle (8) gegenteilige elektrische Polung vorgesehen wird.

## Claims

1. Welding device (1) for carrying out a welding process with an electrode (E) on a workpiece (W), wherein a welding current source (8) is provided in the welding device (1), and has a first connection socket (AB1) for electrically connecting a welding torch (4) by a welding lead (9,) and a second connection socket (AB2) for electrically connecting a workpiece (W) by a ground cable (M), wherein a first voltage-measuring device (12) for detecting a first electrical welding voltage signal (U1) between the connection sockets (AB1, AB2) is provided in the welding device (1), **characterized in that** a voltage measuring socket (MB1, MB2) for connecting a measuring line (ML1, ML2) or two voltage measuring sockets (MB1, MB2) for connecting one measuring line (ML1, ML2) each are provided in the welding device (1), wherein a second voltage-measuring device (13) for detecting a second electrical welding voltage signal (U2) between the one voltage measuring socket (MB1, MB2) and one of the connection sockets (AB1, AB2) or between the two voltage measuring sockets (MB1, MB2) is provided in the welding device (1), wherein a control unit (7) is provided in the welding device (1), which is designed to use at least one of the welding voltage signals (U1, U2) to determine control parameters for controlling or regulating the welding process, and to control the welding current source (8) with the determined control parameters, wherein the control unit (7) is designed to ignore the first welding voltage signal (U1) of the first voltage-measuring device (12), and to use the second welding voltage signal (U2) of the second voltage-measuring device (13) to determine the control parameters in a normal operating mode, **in that** the control unit (7) is further designed to detect an error state in the second welding voltage signal (U2) on the basis of the second welding voltage signal (U2), and to switch to an emergency operating mode without interrupting the welding process upon detecting the error state, and **in that** the control unit (7) is designed to ignore the second welding voltage signal (U2) of the second voltage-measuring device (13) in an emergency operating mode, and to use the first welding voltage signal (U1) of the first voltage-measuring device (12) to determine the control parameters.

2. Welding device (1) according to claim 1, **characterized in that** a welding torch (4) is electrically connected to the first connection socket (AB1) by a welding lead (9), and a ground cable (M) connected or connectable to the workpiece (W) is electrically connected to the second connection socket (AB2), **and in that** a first measuring line (ML1) is connected to the one voltage measuring socket (MB1), and is electrically connected to a first voltage measuring point (MP1) in the welding lead (9) located between the first connection socket (AB1) and the electrode (E) of the welding torch (4), wherein the second voltage-measuring device (13) is designed to detect the second electrical welding voltage signal (U2) between the one voltage measuring socket (MB1) and the second connection socket (AB2), **or in that** a second measuring line (ML2) is connected to the one voltage measuring socket (MB2), and is electrically connected to a second voltage measuring point (MP2) in the ground cable (M), or can be electrically connected to the workpiece (W), wherein the second voltage-measuring device (13) is designed to detect the second electrical welding voltage signal (U2) between the one voltage measuring socket (MB2) and the first connection socket (AB1).

3. Welding device (1) according to claim 1, **characterized in that** a welding torch (4) is connected to the first connection socket (AB1) by a welding lead (9), and a ground cable (M) connected or connectable to the workpiece (W) is connected to the second connection socket (AB2), **in that** a first measuring line (ML1) is connected to one of the two voltage measuring sockets (MB1), and is electrically connected to a first voltage measuring point (MP1) in the welding lead (9) located between the first connection socket (AB1) and the electrode (E) of the welding torch (4), and a second measuring line (ML2) is connected to the other voltage measuring socket (MB2), and is electrically connected to a second voltage measuring point (MP2) in the ground cable (M), or can be electrically connected to the workpiece (W), wherein the first measuring line (ML1) and the second measuring line (ML2) are preferably twisted at least in sections.

4. Welding device (1) according to one of claims 1 to 3, **characterized in that** a feed unit (6) for feeding a welding wire to the welding torch (4) is provided in the welding device (1), wherein the second voltage-measuring device (13) and the one voltage measuring socket (MB1, MB2) or the two voltage measuring sockets (MB1, MB2) is/are provided on the feed unit (6), and that the second voltage-measuring device (13) is connected to the control unit (7) via a communications connection for transmitting the second electrical welding voltage signal (U2).

5. Welding device (1) according to one of claims 1 to 4, **characterized in that** an additional measurement voltage source (14) is provided in the welding device (1), which is connected to the two voltage measuring sockets (MB1, MB2), or which is connected to the one voltage measuring socket (MB1, MB2) and one of the connection sockets (AB1, AB2), wherein the control unit (7) is designed to detect the error state in the second welding voltage signal (U2) on the basis of an electrical measurement voltage (UM) generated by the measurement voltage source (14).

6. Welding device (1) according to claim 5, **characterized in that** the measurement voltage source (14) has an opposite electrical polarity to that of the welding current source (8).

7. Welding device (1) according to claim 5 or 6, **characterized in that** the measurement voltage source (14) is connected to at least one voltage measuring socket (MB1, MB2) with high impedance, **and/or in that** the measurement voltage source (14) is connected to at least one voltage measuring socket (MB1, MB2) via at least one known ohmic resistor (RM).

8. Welding device (1) according to one of claims 1 to 7, **characterized in that** a welding current circuit model is stored in the control unit (7), and **in that** the control unit (7) is designed to detect the error state in the second welding voltage signal (U2) on the basis of the welding current circuit model, wherein the welding current circuit model preferably contains at least one model of the welding lead (9), wherein the model of the welding lead (9) preferably contains at least one ohmic resistor (R1, R2) and at least one inductor (L1, L2).

9. Welding device (1) according to claim 8, **characterized in that** model parameters of the welding current circuit model can be adapted to the welding current circuit of an actually-constructed welding device (1).

10. Welding device (1) according to one of claims 2 to 9, **characterized in that** a welding robot (3) is provided in the welding device (1), wherein the welding torch (4) is arranged on the welding robot (3) and can be moved by the welding robot (3), and wherein the first voltage measuring point (MP1) is provided on the welding robot (3), preferably in the region of the welding torch (4).

11. Method for carrying out a welding process with an electrode (E) on a workpiece (W), wherein the electrode (E) is connected to a welding current source (8) by a welding lead (9), and the workpiece (W) is connected to the welding current source (8) by a ground cable (M), wherein a welding current circuit is closed between the electrode (E) and the workpiece (W) after the ignition of an arc (LB), **characterized in that** a first electrical welding voltage signal (U1) and a second electrical welding voltage signal (U2) are detected in the welding current circuit, wherein the second electrical welding voltage signal (U2) is detected closer to the arc (LB) than the first electrical welding voltage signal (U1), wherein the detected welding voltage signals (U1, U2) are transmitted to a control unit (7), and wherein the control unit (7) uses at least one of the welding voltage signals (U1, U2) to determine control parameters for controlling or regulating the welding process, and wherein the control unit (7) controls the welding current source (8) with the determined control parameters, wherein the control unit (7) ignores the first welding voltage signal (U1) in a normal operating mode, and uses the second welding voltage signal (U2) to determine the control parameters, **in that** the control unit (7) detects an error state in the second welding voltage signal (U2) on the basis of the second welding voltage signal (U2) and switches to an emergency operating mode without interrupting the welding process upon detecting the error state, preferably within 100 µs, and **in that** the control unit (7) ignores the second welding voltage signal (U2) in the emergency operating mode, and uses the first welding voltage signal (U1) to determine the control parameter.

12. Method according to claim 11, **characterized in that** the error state in the second welding voltage signal (U2) is detected on the basis of a welding current circuit model of the welding current circuit stored in the control unit (7).

13. Method according to claim 12, **characterized in that** the welding current circuit model contains at least one model of the welding lead (9), wherein the model of the welding lead (9) preferably contains at least one ohmic resistor (R1, R2) and at least one inductor (L1, L2).

14. Method according to claim 12 or 13, **characterized in that** model parameters of the welding current circuit model are adapted to a welding current circuit of an actually-constructed welding device (1).

15. Method according to one of claims 11 to 14, **characterized in that** a measurement voltage (UM) is applied to the welding current circuit by an additional measurement voltage source (14), and **in that** the control unit (7) detects the error state in the second welding voltage signal (U2) on the basis of the measurement voltage (UM), wherein the measurement voltage source (14) is preferably connected to the welding current circuit with high impedance and/or via a known ohmic resistor (UM), and wherein an electrical polarity opposite to the welding current source (8) is preferably provided at the measurement voltage source (14).

## Revendications

1. Dispositif de soudage (1) permettant de réaliser un processus de soudage avec une électrode (E) sur une pièce (W), dans lequel une source de courant de soudage (8) est prévue dans le dispositif de soudage (1), laquelle comporte une première douille de raccordement (AB1) pour le raccordement électrique à un chalumeau de soudage (4) au moyen d'une ligne de soudage (9) et comporte une seconde douille de raccordement (AB2) pour le raccordement électrique à une pièce (W) au moyen d'une ligne de masse (M), dans lequel un premier appareil de mesure de tension (12) permettant de détecter un premier signal de tension de soudage (U1) électrique entre les douilles de raccordement (AB1, AB2) est prévu dans le dispositif de soudage (1), **caractérisé en ce que** sont prévues dans le dispositif de soudage (1) une douille de mesure de tension (MB1, MB2) pour le raccordement à une ligne de mesure (ML1, ML2) ou deux douilles de mesure de tension (MB1, MB2) pour le raccordement à respectivement une ligne de mesure (ML1, ML2), dans lequel un second appareil de mesure de tension (13) permettant de détecter un second signal de tension de soudage (U2) électrique entre l'une des douilles de mesure de tension (MB1, MB2) et l'une des douilles de raccordement (AB1, AB2) ou entre les deux douilles de mesure de tension (MB1, MB2) est prévu dans le dispositif de soudage (1), dans lequel une unité de commande (7) est prévue dans le dispositif de soudage (1), laquelle est configurée pour utiliser au moins l'un des signaux de tension de soudage (U1, U2) pour déterminer des paramètres de commande pour la commande ou la régulation du processus de soudage, et pour commander la source de courant de soudage (8) avec les paramètres de commande déterminés, dans lequel l'unité de commande (7) est configurée pour, dans un mode de fonctionnement normal, ignorer le premier signal de tension de soudage (U1) du premier appareil de mesure de tension (12) et utiliser le second signal de tension de soudage (U2) du second appareil de mesure de tension (13) pour déterminer les paramètres de commande, **en ce que** l'unité de commande (7) est en outre configurée pour reconnaître, à l'aide du second signal de tension de soudage (U2), un état d'erreur dans le second signal de tension de soudage (U2) et, en cas de reconnaissance de l'état d'erreur, pour passer dans un mode de fonctionnement d'urgence sans interruption du processus de soudage, et **en ce que** l'unité de commande (7) est configurée pour, dans le mode de fonctionnement d'urgence, ignorer le second signal de tension de soudage (U2) du second appareil de mesure de tension (13) et utiliser le premier signal de tension de soudage (U1) du premier appareil de mesure de tension (12) pour déterminer les paramètres de commande.

2. Dispositif de soudage (1) selon la revendication 1,
**caractérisé en ce qu'**un chalumeau de soudage (4) est relié électriquement à la première douille de raccordement (AB1) au moyen d'une ligne de soudage (9) et une ligne de masse (M) reliée ou pouvant être reliée à la pièce (W) est reliée électriquement à la seconde douille de raccordement (AB2) **et en ce qu'**une première ligne de mesure (ML1) est raccordée à l'une des douilles de mesure de tension (MB1), laquelle première ligne de mesure est reliée électriquement à un premier point de mesure de tension (MP1) dans la ligne de soudage (9) situé entre la première douille de raccordement (AB1) et l'électrode (E) du chalumeau de soudage (4), dans lequel le second appareil de mesure de tension (13) est configuré pour détecter le second signal de tension de soudage (U2) électrique entre la douille de mesure de tension (MB1) et la seconde douille de raccordement (AB2), **ou en ce qu'**une seconde ligne de mesure (ML2) est raccordée à l'une des douilles de mesure de tension (MB2), laquelle seconde ligne de mesure est reliée électriquement à un second point de mesure de tension (MP2) dans la ligne de masse (M) ou peut être reliée électriquement à la pièce (W), dans lequel le second appareil de mesure de tension (13) est configuré pour détecter le second signal de tension de soudage (U2) électrique entre la douille de mesure de tension (MB2) et la première douille de raccordement (AB1).

3. Dispositif de soudage (1) selon la revendication 1, **caractérisé en ce qu'**un chalumeau de soudage (4) est relié à la première douille de raccordement (AB1) au moyen d'une ligne de soudage (9) et une ligne de masse (M) reliée ou pouvant être reliée à la pièce (W) est reliée à la seconde douille de raccordement (AB2), **en ce qu'**une première ligne de mesure (ML1) est raccordée à l'une des deux douilles de mesure de tension (MB1), laquelle première ligne de mesure est reliée électriquement à un premier point de mesure de tension (MP1) dans la ligne de soudage (9) situé entre la première douille de raccordement (AB1) et l'électrode (E) du chalumeau de soudage (4) et une seconde ligne de mesure (ML2) est raccordée à l'autre douille de mesure de tension (MB2), laquelle seconde ligne de mesure est reliée électriquement à un second point de mesure de tension (MP2) dans la ligne de masse (M) ou peut être reliée électriquement à la pièce (W), dans lequel la première ligne de mesure (ML1) et la seconde ligne de mesure (ML2) sont de préférence torsadées au moins dans certaines sections.

4. Dispositif de soudage (1) selon l'une des revendications 1 à 3,
**caractérisé en ce qu'**une unité d'avance (6) permettant d'amener un fil de soudage au chalumeau de soudage (4) est prévue dans le dispositif de soudage (1), dans lequel le second appareil de mesure de tension (13) et l'une des douilles de mesure de tension (MB1, MB2) ou les deux douilles de mesure de tension (MB1, MB2) sont prévus sur l'unité d'avance (6) et **en ce que** le second appareil de mesure de tension (13) est relié à l'unité de commande (7) par l'intermédiaire d'une liaison de communication pour la transmission du second signal de tension de soudage (U2) électrique.

5. Dispositif de soudage (1) selon l'une des revendications 1 à 4,
**caractérisé en ce qu'**une source de tension de mesure supplémentaire (14) est prévue dans le dispositif de soudage (1), laquelle est reliée aux deux douilles de mesure de tension (MB1, MB2) ou est reliée à l'une des douilles de mesure de tension (MB1, MB2) et à l'une des douilles de raccordement (AB1, AB2), dans lequel l'unité de commande (7) est configurée pour reconnaître l'état d'erreur dans le second signal de tension de soudage (U2) à l'aide d'une tension de mesure (UM) électrique générée par la source de tension de mesure (14).

6. Dispositif de soudage (1) selon la revendication 5, **caractérisé en ce que** la source de tension de mesure (14) présente une polarité électrique opposée à celle de la source de courant de soudage (8).

7. Dispositif de soudage (1) selon la revendication 5 ou 6,
**caractérisé en ce que** la source de tension de mesure (14) est raccordée avec une haute impédance à au moins une douille de mesure de tension (MB1, MB2) et/ou **en ce que** la source de tension de mesure (14) est raccordée à au moins une douille de mesure de tension (MB1, MB2) par l'intermédiaire d'au moins une résistance ohmique (RM) connue.

8. Dispositif de soudage (1) selon l'une des revendications 1 à 7,
**caractérisé en ce qu'**un modèle de circuit de soudage est enregistré dans l'unité de commande (7) et **en ce que** l'unité de commande (7) est configurée pour reconnaître l'état d'erreur dans le second signal de tension de soudage (U2) à l'aide du modèle de circuit de soudage, dans lequel le modèle de circuit de soudage comprend de préférence au moins un modèle de la ligne de soudage (9), dans lequel le modèle de la ligne de soudage (9) comprend de préférence au moins une résistance ohmique (R1, R2) et au moins une inductance (L1, L2).

9. Dispositif de soudage (1) selon la revendication 8, **caractérisé en ce que** des paramètres de modèle du modèle de circuit de soudage peuvent être adaptés au circuit de soudage d'un dispositif de soudage (1) réellement construit.

10. Dispositif de soudage (1) selon l'une des revendications 2 à 9, **caractérisé en ce qu'**un robot de soudage (3) est prévu dans le dispositif de soudage (1), dans lequel le chalumeau de soudage (4) est disposé sur le robot de soudage (3) et peut être déplacé par le robot de soudage (3) et dans lequel le premier point de mesure de tension (MP1) est prévu sur le robot de soudage (3), de préférence dans la zone du chalumeau de soudage (4).

11. Procédé permettant de réaliser un processus de soudage avec une électrode (E) sur une pièce (W), dans lequel l'électrode (E) est reliée à une source de courant de soudage (8) par l'intermédiaire d'une ligne de soudage (9) et la pièce (W) est reliée à la source de courant de soudage (8) par l'intermédiaire d'une ligne de masse (M), dans lequel, après l'allumage d'un arc électrique (LB) entre l'électrode (E) et la pièce (W), un circuit de soudage est fermé,
**caractérisé en ce qu'**un premier signal de tension de soudage (U1) électrique et un second signal de tension de soudage (U2) électrique sont détectés dans le circuit de soudage, dans lequel le second signal de tension de soudage (U2) électrique est détecté plus près de l'arc électrique (LB) que le premier signal de tension de soudage (U1) électrique, dans lequel les signaux de tension de soudage (U1, U2) détectés sont transmis à une unité de commande (7) et dans lequel l'unité de commande (7) utilise au moins l'un des signaux de tension de soudage (U1, U2) pour déterminer des paramètres de commande pour la commande ou la régulation du processus de soudage et dans lequel l'unité de commande (7) commande la source de courant de soudage (8) avec les paramètres de commande déterminés, dans lequel, dans un mode de fonctionnement normal, l'unité de commande (7) ignore le premier signal de tension de soudage (U1) et utilise le second signal de tension de soudage (U2) pour déterminer les paramètres de commande, **en ce que** l'unité de commande (7) reconnaît, à l'aide du second signal de tension de soudage (U2), un état d'erreur dans le second signal de tension de soudage (U2) et, en cas de reconnaissance de l'état d'erreur, de préférence en l'espace de 100 µs, passe dans un mode de fonctionnement d'urgence sans interruption du processus de soudage, et **en ce que,** dans le mode de fonctionnement d'urgence, l'unité de commande (7) ignore le second signal de tension de soudage (U2) et utilise le premier signal de tension de soudage (U1) pour déterminer les paramètres de commande.

12. Procédé selon la revendication 11, **caractérisé en ce que** la reconnaissance de l'état d'erreur dans le second signal de tension de soudage (U2) est effectuée à l'aide d'un modèle de circuit de soudage du circuit de soudage enregistré dans l'unité de commande (7).

13. Procédé selon la revendication 12, **caractérisé en ce que** le modèle de circuit de soudage comprend au moins un modèle de la ligne de soudage (9), dans lequel le modèle de la ligne de soudage (9) comprend de préférence au moins une résistance ohmique (R1, R2) et au moins une inductance (L1, L2).

14. Procédé selon la revendication 12 ou 13, **caractérisé en ce que** des paramètres de modèle du modèle de circuit de soudage sont adaptés à un circuit de soudage d'un dispositif de soudage (1) réellement construit.

15. Procédé selon l'une des revendications 11 à 14,
**caractérisé en ce qu'**une tension de mesure (UM) est appliquée au circuit de soudage au moyen d'une source de tension de mesure supplémentaire (14) et **en ce que** l'unité de commande (7) reconnaît l'état d'erreur dans le second signal de tension de soudage (U2) à l'aide de la tension de mesure (UM), dans lequel la source de tension de mesure (14) est reliée au circuit de soudage de préférence avec une haute impédance et/ou par l'intermédiaire d'une résistance ohmique (UM) connue et dans lequel une polarité électrique opposée à celle de la source de courant de soudage (8) est de préférence prévue au niveau de la source de tension de mesure (14).
